# EUROPÄISCHE PATENTSCHRIFT

(11) **EP 0 997 685 B1**
(45) Veröffentlichungstag und Bekanntmachung des Hinweises auf die Patenterteilung: **09.06.2004**
(21) Anmeldenummer: 00101727.6
(22) Anmeldetag: 31.01.1997
(51) Int. Cl.: F23D 11/38, F23D 11/44, F16K 23/00

(54) **Düsenstock für einen Öldruckzerstäubungsbrenner sowie Abschlussventil für einen solchen Düsenstock**
Nozzle connection for a pressurized oil atomisation burner and shut valve for such nozzle connection
Raccord de buse pour un brûleur à pulvérisation de fuel sous pression et vanne d'arrêt pour un tel raccord de buse

(30) Priorität: 16.02.1996 CH 40596
(43) Veröffentlichungstag der Anmeldung: 03.05.2000
(62) Teilanmeldung aus: 97810048.5
(73) Patentinhaber: SATRONIC AG, 8157 Dielsdorf (CH)
(72) Erfinder: Lüscher, Michel, 8309 Breite-Nürensdorf (CH)
(74) Vertreter: Leson, Thomas Johannes Alois, Dipl.-Ing.

(56) Entgegenhaltungen:
- EP-A- 0 215 323
- EP-A- 0 495 402
- DE-A- 3 142 074
- DE-A- 3 226 023
- DE-A- 4 215 995
- DE-A- 4 216 008
- DE-C- 3 901 032

## Beschreibung

### TECHNISCHES GEBIET

Die vorliegende Erfindung bezieht sich auf das Gebiet der Brennertechnik. Sie betrifft einen Düsenstock für einen Oeldruckzerstäubungsbrenner, welcher Düsenstock an seinem einen Ende einen Düsenraum zur Aufnahme einer Druckzerstäuberdüse und an seinem anderen Ende ein Anschlussteil zum Anschluss einer Oelzuführungsleitung aufweist, und welcher Düsenstock ein zwischen dem Anschlussteil und dem Düsenraum angeordnetes Abschlussventil zum Unterbrechen des Oelflusses bei nicht gezündetem Brenner umfasst. Sie betrifft weiterhin ein Abschlussventil für einen solchen Düsenstock.

Ein Düsenstock der eingangs genannten Art ist z.B. aus der Druckschrift DE-A1-42 15 995 bekannt.

### STAND DER TECHNIK

Bei Oeldruckzerstäubungsbrennern, wie sie beispielsweise für Oelheizungen in Häusern zum Einsatz kommen, wird das zu verbrennende Oel mittels eine Pumpe mit einem Druck von mehreren bar durch eine Druckzerstäuberdüse gepresst, dort zu feinen Tröpfchen zerstäubt, mit eingeblasener Luft vermischt und in einer Flamme verbrannt. Die Flamme wird durch einen geeigneten Zündmechanismus gezündet und brennt anschliessend selbständig und stabil, solange Verbrennungsluft und Oel in ausreichendem Masse und unter den erforderlichen Bedingungen (Druck, Strömungsgeschwindigkeit etc.) zugeführt werden.

Bei derartigen Oeldruckzerstäubungsbrennern kann es, wenn keine besonderen Vorkehrungen getroffen werden, beim Abschalten des Brenners zu einem strahlartigen Austreten von Oel aus der Druckzerstäuberdüse kommen. Ein solches "Nachtröpfeln" führt in der Abstellphase und in der anschliessenden Startphase zu einem Ueberschuss an Heizöl im Brennraum, der sich in Form von unverbrannten Kohlenwasserstoffen im Abgas bemerkbar macht und die Emissionswerte der Heizanlage erheblich verschlechtert. Dieselben unerwünschten Auswirkungen ergeben sich, wenn infolge der Erwärmung des in der Zuleitung zur Düse bzw. im Düsenstock stehenden Oeles, insbesondere wenn der Düsenstock als Oelvorwärmer ausgebildet ist, eine Volumenausdehnung erfolgt. Die Volumenausdehnung führt zu einem Druckaufbau in der Leitung und zu einer Abgabe von Oel aus der Düsenöffnung.

Es ist daher in der Vergangenheit vielfach vorgeschlagen worden, zur Verhinderung des "Nachtröpfelns" oder eines sonstigen Austretens von Oel ausserhalb der eigentlichen Betriebsphase des Brenners nahe an der Düse in der Zuleitung ein Abschlussventil anzuordnen, welches das unerwünschte Austreten von Oel aus der Düse weitgehend verhindert. Um den schädlichen Raum zwischen dem Abschlussventil und der eigentlichen Düse und damit das nicht kontrollierbare Oelvolumen in der Zuleitung möglichst klein zu halten, ist das Abschlussventil dabei überwiegend als integrierter Teil des mit einem Filter versehenen Düseneinsatzes ausgebildet, der in den Düsenstock einschraubbar ist und bei Bedarf ausgetauscht werden kann. So ist in der DE-A1-33 08 153 der Anmelderin beispielsweise eine (einschraubbare) Druckzerstäuberdüse offenbart, bei der zwischen dem Filter (4) und der eigentlichen Austrittsöffnung (10) ein selbsttätig schaltendes Abschluss- bzw. Absperrventil (21) angeordnet ist. In diesem Absperrventil wird ein Verschlusskörper (22) in Form einer Kugel mittels einer membranartigen Springfeder (24) dichtend gegen eine Ventilfläche (23) gedrückt. Das Ventil öffnet nur dann, wenn Oel mit einem ausreichend grossen Druck am Ventil ansteht.

Aus der DE-C1-39 01 032 ist eine Druckzerstäuberdüse mit integriertem Abschlussventil bekannt, bei welchem anstelle der Springfeder eine Spiralfeder eingesetzt ist. Der dadurch erreichbare längere Ventilweg wird eingesetzt, um das Nachtropfverhalten der Düse weiter zu verbessern.

Aus der EP-A1-0 566 855 der Anmelderin ist eine Druckzerstäuberdüse mit integriertem Abschlussventil bekannt, bei dem mittels einer spiralförmigen Druckfeder über einen Schliesskolben eine Membran dichtend gegen einen Ventilsitz gedrückt wird. Eine andere Lösung, wie sie in der DE-A1-33 20 270 offenbart ist, verwendet anstelle der Membran eine Ventilplatte. Eine weitere Lösung, wie sie in der DE-C2-38 00 300 beschrieben ist, verwendet ein federbelastetes Ventilelement, welches unter Zwischenschaltung eines O-Ringes auf einer Dichtfläche ruht.

Bei allen diesen Lösungen ist das Abschluss- bzw. Absperrventil integrierter Bestandteil des einschraub- und auswechselbaren Düseneinsatzes. Vorteilhaft ist dabei, dass das Abschlussventil sehr nahe an der eigentlichen Düse plaziert ist und daher das unerwünschte Austreten von Oel auf ein Minimum reduziert ist. Nachteilig ist jedoch, dass das Ventil Teil des Düseneinsatzes ist und daher zusammen mit dem Düseneinsatz ein- und ausgebaut wird. Im Zuge der Normierung sind nämlich durch die Europäische Norm EN 293, die in etwa der älteren Deutschen Norm DIN 4790 entspricht, für den einschraubbaren Düseneinsatz äussere Masse festgelegt worden (Bild 1 der DIN EN 293), die gewährleisten sollen, dass in den vorhandenen Düsenstock eines Oelbrenners Druckzerstäuberdüsen unterschiedlicher Hersteller problemlos eingebaut werden können.

Da nun sowohl Düseneinsätze mit integrierten Abschlussventil als auch Düseneinsätze ohne integriertes Abschlussventil auf dem Markt angeboten werden, kann es unter Umständen passieren, dass ein fertig montierter Düsenstock überhaupt kein Abschlussventil aufweist, weil ein Düseneinsatz ohne integriertes Abschlussventil eingebaut worden ist, oder dass das integrierte Abschlussventil in seiner Schaltcharakteristik nicht zu der sonstigen Auslegung des jeweiligen Brenners passt. Es ist daher wünschenswert, einen Düsenstock bereitzustellen, der unabhängig vom ausgewählten Düseneinsatz ein geeignetes Absperrventil enthält.

In der eingangs genannten DE-A1-42 15 995 ist nun bereits ein als Vorwärmer ausgelegter Düsenstock für Oeldruckzerstäubungsbrenner vorgeschlagen worden, bei dem zwischen dem Ausgang der (elektrisch betriebenen) Heizung und dem Einbauraum für den Düseneinsatz ein fest im Düsenstock montiertes Magnetventil angeordnet ist, welches als Absperrventil ausserhalb des eigentlichen Brennerbetriebes die Oelzufuhr zur Düse unterbricht und damit ein Vor- und Nachtropfen des Oeles aus der Düse verhindert. In diesen bekannten Düsenstock können daher wahlweise Düseneinsätze mit und ohne integriertes Abschlussventil eingeschraubt werden, ohne dass sich hinsichtlich des Vor- und Nachtropfens wesentliche Unterschiede ergeben.

Der bekannte Düsenstock hat jedoch eine Reihe von Nachteilen:
- Das Magnetventil ist von seiner Bauart her fast halb so lang wie der gesamte Heizungsteil. Dies hat zur Folge, dass entweder der Düsenstock eine erheblich grössere Gesamtlänge aufweist als die üblichen Düsenstöcke, oder dass der Einbauraum für den Düseneinsatz gegenüber der Norm EN 293 wesentlich verkürzt ist, so dass normgerechte Düseneinsätze mit angebautem Filter gar nicht eingebaut werden können. Es ist dann notwendig, wie dies in der Figur der DE-A1-42 15 995 gezeigt ist, ein separates Filter am Eingang des Vorwärmers vorzusehen.
- Bedingt durch die grosse Länge des Magnetventils sind spezielle Massnahmen erforderlich, um die von der Heizung ausgehende Wärme bis zur Düse zu leiten. Dazu muss eine spezielle Hülse (48) aus gut wärmeleitendem Kupfer vorgesehen werden, die das Magnetventil thermisch überbrückt.
- Um eine wirksame Arbeitsweise des Magnetventils zu gewährleisten, muss der magnetische Kreis möglichst weitgehend geschlossen sein. Dazu wird das Aussenrohr des Dü-senstocks aus einem ferromagnetischen Material gewählt, was die Materialauswahl erheblich einschränkt.
- Der Einbau der Magnetspule des Magnetventils und der elektrischen Zuführungen beansprucht nicht nur zusätzlichen Platz im Düsenstock, sondern erfordert auch einen erheblichen Montageaufwand. Dies gilt auch für ein etwaiges Auswechseln des Ventils.
- Die Ansteuerung des Magnetventils in Koordination mit dem jeweiligen Betriebszustand des Brenners erfordert einen zusätzlichen Aufwand an Mess- und Steuerelektronik und eine genaue Abstimmung der Steuerungsparameter.

In der Druckschrift DE 42 15 995 A1 ist ein Düsenstock offenbart, der eine kompakte und sichere Bauweise aufweist. Er besitzt ein zylindrisches Rohr, das über seine gesamte Baulänge einen im wesentlichen gleichen Durchmesser aufweist. Die elektrischen Verbindungen zum Absperrventil sind inerhalb des Außendurchmessers des Rohres geführt. Der Düsenstock ist aus modularen Bauteilen aufgebaut.

### DARSTELLUNG DER ERFINDUNG

Es ist daher die Aufgabe der Erfindung, einen Düsenstock zu schaffen, der bei praktisch gleichbleibender Länge unabhängig von dem eingebauten Düseneinsatz ein Vor- und Nachtropfen des Oels sicher verhindert, den Einbau beliebiger normgerechter Düseneinsätze zulässt, einfach aufgebaut und leicht zu montieren und zu warten ist, sowie ein Abschlussventil für einen solchen Düsenstock vorzuschlagen.

Die Aufgabe wird durch einen Düsenstock mit den Merkmalen des Anspruchs 1 gelöst. Durch die erfindungsgemässe Ausbildung des Abschlussventils ist es möglich, den Düsenstock kompakt, einfach und wartungsfreundlich aufzubauen, und unnötigen Steuerungsaufwand zu vermeiden. Grundsätzlich kann das Ventil als thermisch, also z.B. aufgrund der Wärme des Oelvorwärmers arbeitendes, oder als rein mechanisch, also z.B. aufgrund des Oeldruckes arbeitendes Ventil, ausgebildet sein. Weiterendwicklenger sind in den abhängigen Ansprüchen definiert.

Eine erste bevorzugte Ausführungsform des Düsenstocks nach der Erfindung ist dadurch gekennzeichnet, dass das Abschlussventil ein mechanisch arbeitendes Ventil ist, dass das Abschlussventil durch den Druck des am Düsenstock anstehenden Oeles betätigt wird, und dass das Abschlussventil ein Ventilelement umfasst, welches gegen den Oeldruck mittels einer vorgespannten Druckfeder dichtend gegen einen Ventilsitz gedrückt wird. Hierdurch lassen sich einfach aufgebaute und sicher arbeitende Abschlussventile verwenden, die sich bereits als in den Düseneinsatz integrierte Ventile bewährt haben.

Als Ventilelemente kommen neben Ventilplatten, O-Ringen, Kegeln oder dgl. vor allem auch Kugeln in Frage, die auf einen entsprechenden Ventilsitz bzw. gegen eine entsprechende Dichtfläche gedrückt werden. Ein besonders kompakter und strömungstechnisch günstiger Aufbau ergibt sich, wenn gemäss einer bevorzugten Weiterbildung der ersten Ausführungsform das Ventilelement als Membran ausgebildet ist, der Ventilsitz auf der Dichtungsseite der Membran konzentrisch eine zentrale Einlassbohrung umschliesst, welche beim Aufliegen der Membran auf dem Ventilsitz verschlossen ist, der Ventilsitz auf der Dichtungsseite der Membran konzentrisch von einer ersten von der Membran überdeckten Ringnut umgeben ist, in welche das Oel aus der Einlassbohrung fliesst, wenn die Membran von dem Ventilsitz abhebt, und wenn seitlich neben der Membran wenigstens eine in axialer Richtung verlaufende Auslassbohrung vorgesehen ist, welche mit der ersten Ringnut in Verbindung steht und das Oel aus der ersten Ringnut zum Ausgang des Abschlussventils leitet.

Solange das Ventil geschlossen ist, wirkt der Oeldruck auf die kleinere, vom Ventilsitz umschlossene Fläche der Membran. Oeffnet das Ventil, wirkt der Druck auf die grössere, von der ersten Ringnut umschlossene Fläche der Membran. Damit wirkt auf die Druckfeder eine im Verhältnis beider Flächen höhere Kraft, so dass die Membran mit einem geringeren Druck in der Oeffnungsstellung gehalten werden kann. Hierdurch wird u.a. ein verringerter Druckabfall am Ventil erzielt.

Weitere Ausführungsformen des erfindungsgemässen Düsenstockes ergeben sich aus den abhängigen Ansprüchen.

Das erfindungsgemässe Abschlussventil für den Düsenstock nach der Erfindung ist dadurch gekennzeichnet, dass das Abschlussventil ein mechanisch arbeitendes Ventil ist, dass das Abschlussventil durch den Druck des am Düsenstock anstehenden Oeles betätigt wird, und dass das Abschlussventil ein Ventilelement umfasst, welches gegen den Oeldruck mittels einer vorgespannten Druckfeder dichtend gegen einen Ventilsitz gedrückt wird.

Besonders bewährt hat es sich, wenn beim erfindungsgemässen Abschlussventil gemäss einer bevorzugten Ausführungsform das Ventilelement als Membran ausgebildet ist, der Ventilsitz auf der Dichtungsseite der Membran konzentrisch eine zentrale Einlassbohrung umschliesst, welche beim Aufliegen der Membran auf dem Ventilsitz verschlossen ist, wenn der Ventilsitz auf der Dichtungsseite der Membran konzentrisch von einer ersten Ringnut umgeben ist, in welche das Oel aus der Einlassbohrung fliesst, wenn die Membran von dem Ventilsitz abhebt, und wenn seitlich neben der Membran wenigstens eine in axialer Richtung verlaufende Auslassbohrung vorgesehen ist, welche mit der ersten Ringnut in Verbindung steht und das Oel aus der ersten Ringnut zum Ausgang des Abschlussventils leitet. Die Vorteile dieses Ventilaufbaus sind bereits oben erläutert worden.

Besonders kompakt und gleichzeitig wartungsfreundlich ist das Abschlussventil, wenn gemäss einer bevorzugten Weiterbildung die Einlassbohrung, der Ventilsitz und die erste Ringnut im Boden eines Gewindesackloches in einem Ventilgehäuse angeordnet sind, die Membran auf der Frontseite einer Ventilschraube angeordnet ist, welche mit einem Aussengewinde in das Gewindesackloch einschraubbar ist, wenn in der Ventilschraube ein Federraum eingelassen ist, welcher von der Membran verschlossen wird und in welchem die Druckfeder untergebracht ist, wenn zwischen der Druckfeder und der Membran ein Druckbolzen vorgesehen ist, welcher von der Druckfeder beaufschlagt wird und die Membran gegen den Ventilsitz drückt, wenn die Auslassbohrung in der Ventilschraube verläuft, und wenn die Auslassbohrung bei eingeschraubter Ventilschraube mit einer zweiten Ringnut in Verbindung steht, welche auf der Dichtungsseite der Membran die erste Ringnut konzentrisch umgibt und mit dieser durch wenigstens eine Verbindungsnut verbunden ist.

### KURZE BESCHREIBUNG DER ZEICHNUNGEN

Die Erfindung soll nachfolgend anhand von Ausführungsbeispielen im Zusammenhang mit der Zeichnung näher erläutert werden. Es zeigen
- Fig. 1: im Längsschnitt ein bevorzugtes Ausführungsbeispiel eines Düsenstockes nach der Erfindung mit eingeschraubtem Düseneinsatz und einem am Ausgang der Heizung angeordneten Abschlussventil;
- Fig. 2: im vergrösserten Längsschnitt den Aufbau des Abschlussventils aus Fig. 1;
- Fig. 3: im Längsschnitt einen Ausschnitt aus einem zu Fig. 1 vergleichbaren Düsenstock mit verlängertem Abschlussventil; und
- Fig. 4: im vergrösserten Längsschnitt den Aufbau des Abschlussventils aus Fig. 3.

### WEGE ZUR AUSFÜHRUNG DER ERFINDUNG

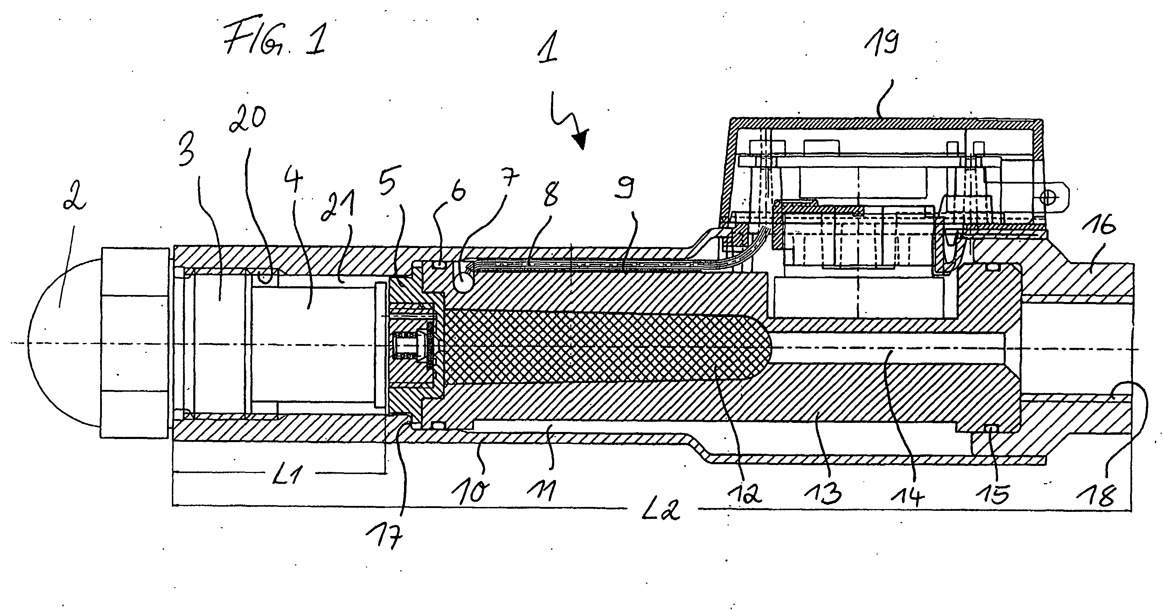

In Fig. 1 ist im Längsschnitt ein bevorzugtes Ausführungsbeispiel eines Düsenstockes nach der Erfindung mit eingeschraubtem Düseneinsatz und einem am Ausgang der Heizung angeordneten Abschlussventil wiedergegeben. Der Düsenstock 1 umfasst ein längliches zylindrisches Rohr 10, welches am einen Ende einen mit einem Innengewinde 20 versehenen Düsenraum zum Einbau einer Druckzerstäuberdüse 2 aufweist. Die Druckzerstäuberdüse 2 ist dabei in an sich bekannter Weise als in seinen Massen genormter einschraubbarer Düseneinsatz ausgebildet und hat zu diesem Zweck ein entsprechendes Aussengewinde 3. Teil des Düseneinsatzes ist ein Filter 4, beispielsweise ein Sinterfilter. Gemäss der eingangs erwähnten Euronorm EN 293 ragt der Düseneinsatz mit einer Länge L1 von maximal 20,5 mm in den Düsenraum 21 hinein, wobei das Filter 4 einen maximalen Durchmesser von 11,8 mm aufweist.

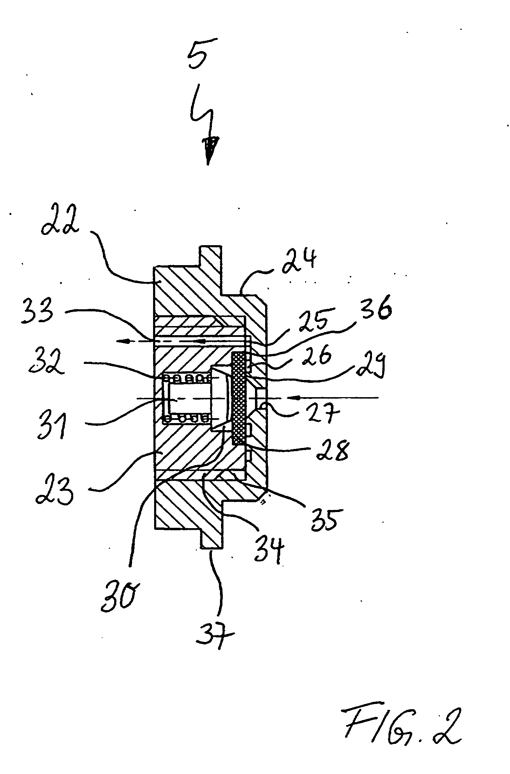

Am anderen Ende des Düsenstockes 1 ist in das Rohr 10 ein mit einer Gewindebohrung 18 ausgestattetes Anschlussteil 16 eingepasst, an welches eine (nicht dargestellte) Oelzuführungs.leitung angeschlossen werden kann, wie dies z.B. in der DE-C2-38 00 300 beschrieben ist. Hauptbestandteil des Düsenstockes 1 ist eine innerhalb des Rohres 10 angeordnete (zylindrische) Heizung 13 zum Vorwärmen des Oeles, die sich mit ihrem einen Ende an einem Durchmesserabsatz im Anschlussteil 16 abstützt. Am anderen Ende der Heizung 13 ist ein kompaktes selbsttätiges Abschlussventil 5 eingesetzt, das weiter unten im Zusammenhang mit der Fig. 2 noch näher beschrieben werden soll.

Abschlussventil 5 und Heizung 13 sind durch abgestufte Durchmesser so aneinander angepasst, dass sie öldicht miteinander verbunden werden können. Beim Zusammenbau des Düsenstockes werden beide zusammen mit dem aufgesetzten Anschlussteil 16 von rechts in das Rohr 10 des Düsenstockes 1 eingeschoben, bis sich eine aussen umlaufende Schulter (37 in Fig. 2) am Abschlussventil 5 an einem entsprechenden Absatz 17 im Rohr 10 abstützt. Das Anschlussteil 16 wird dann im Rohr durch Punktschweissen oder dgl. fixiert, so dass Rohr 10, Heizung 13, Ventil 5 und Anschlussteil 16 eine feste Einheit bilden. Zwischen den beiden Enden ist die Heizung 13 im Aussendurchmesser reduziert, so dass sich in diesem Bereich zwischen der Heizung 13 und dem Rohr 10 ein Ringspalt 11 ergibt, der an beiden Enden der Heizung 13 durch entsprechende O-Ringe 6 und 15 gegen die mit Oel beaufschlagten Räume 18 bzw. 21 im Düsenstock 1 abgedichtet ist.

Die Heizung 13 weist eine zentrale Durchgangsbohrung 14 zur Führung des zu wärmenden Oeles auf, die am einen Ende mit der Gewindebohrung 18 im Anschlussteil 16 in Verbindung steht, und sich zur Druckzerstäuberdüse 2 hin erweitert, um einen vom Oel durchströmten Wärmetauscher 12 aufzunehmen, der mit einer möglichst grossen Oberfläche einen guten Wärmeübergang zwischen der warmen Heizung 13 und dem durchströmenden Oel sicherstellt. Der Wärmetauscher 12 kann z.B. als Sinterkörper aus einer Vielzahl von metallischen Kügelchen hergestellt sein. Es sind aber auch andere Wärmetauscher mit parallelen Kanälen denkbar, wie sie z.B. aus der DE-A1-42 15 995 oder der DE-A1-42 16 008 bekannt sind. Das Aufheizen der Heizung 13 erfolgt beispielsweise über eine im Bereich des Ringspaltes 11 auf den Körper der Heizung 13 aussen aufgebrachte Heizwicklung 9. Andere Heizelemente sind aber auch denkbar. Zur Regelung der Heizleistung ist in einer Ausnehmung im Körper der Heizung 13 ein Temperaturfühler 7 angebracht. Die Zuleitungen 8 zum Temperaturfühler 7 und zur Heizwicklung 9 sind im Ringspalt 11 zu einem seitlich aussen am Düsenstock 1 angebrachten Anschlusskasten 19 mit geeigneten Anschlusskontakten geführt, auf die hier nicht näher eingegangen werden soll. Es ist durchaus auch denkbar, auf den Temperaturfühler 7 zu verzichten und statt dessen eine ungeregelte Heizung einzusetzen.

Die Gesamtlänge L2 des beispielhaften Düsenstockes 1 aus Fig. 1 beträgt nicht mehr als etwa 90 mm, obgleich im Düsenraum 21 die volle Einbaulänge L1 der Euronorm EN 293 zur Verfügung steht. Dieser platzsparende Aufbau ist vor allem dem extrem kompakten Aufbau des Abschlussventils 5 zu verdanken, das im dargestellten Ausführungsbeispiel in axialer Richtung eine Dicke von nur 5,3 mm und einen maximalen Aussendurchmesser im Bereich der umlaufenden Schulter (37 in Fig. 2) von 14,7 mm aufweist. Der innere Aufbau des Abschlussventils 5 ist aus der vergrösserten Längsschnittdarstellung in Fig. 2 ersichtlich.

Das Abschlussventil 5 ist in einem (zur Achse rotationssymmetrischen) Ventilgehäuse 22 untergebracht, welches auf der einen Seite eine zentrale Einlassbohrung 27 für das Oel aufweist, die sich konisch erweitert und in den Boden eines koaxialen Gewindesackloches 35 mündet, welches von der anderen Seite in das Ventilgehäuse 22 eingelassen ist. Im Boden des Geweindesackloches 35 sind weiterhin zwei Ringnuten 26 und 25 angeordnet, die untereinander durch eine in radialer Richtung verlaufende Verbindungsnut 36 verbunden sind und die Einlassbohrung 27 konzentrisch umgeben. Zwischen der konischen Erweiterung der Einlassbohrung 27 und der (inneren) ersten Ringnut 26 ist ein ringförmiger Ventilsitz 29 gebildet, gegen den bei geschlossenem Ventil eine elastische Membran 28, die beispielsweise aus einem ölfesten Gummi besteht, dichtend gedrückt wird. Gerade der Aufbau des Ventils aus federbelasteter Membran und Ventilsitz mit seitlichem Durchgang für das Oel schafft einen extrem kompakten Aufbau mit sehr geringer Bauhöhe.

Die vorzugsweise kreisrunde Membran 28 sitzt in einer angepassten runden Ausnehmung einer Ventilschraube 23, die mittels eines Aussengewindes 34 derart in das Gewindesackloch 35 des Ventilgehäuses 22 einschraubbar ist, dass die Membran 28 auf dem Ventilsitz 29 zu liegen kommt und zugleich die erste Ringnut 26 überdeckt. Unterhalb der Membran 28 ist in der Ventilschraube 23 ein im Durchmesser abgestuftes Sackloch eingebracht, welches durch die Membran 28 abgeschlossen wird und einen Federraum 30 bildet, in welchem eine spiralförmige Druckfeder 32 untergebracht ist. Die Druckfeder 32 drückt in axialer Richtung einen pilzförmigen Druckbolzen 31 gegen die Unterseite der Membran 28, so dass die Membran 28 bei Normaldruck in der Einlassbohrung 27 dichtend auf den Ventilsitz 29 gedrückt wird. Der Ventilsitz 29 steht dabei vorzugsweise wenige 1/10 mm aus der Bodenfläche des Gewindesackloches 35 hervor, damit eine sichere Abdichtung bei geschlossenem Ventil erzielt wird.

Seitlich neben der Membran 28 ist in der Ventilschraube 23 wenigstens eine in axialer Richtung verlaufende Auslassbohrung 33 untergebracht, die am einen Ende mit der zweiten Ringnut 25 in Verbindung steht und am anderen Ende ins Freie mündet. Die zweite Ringnut 25 stellt sicher, dass unabhängig von der Endstellung der eingedrehten Ventilschraube 23 die Auslassbohrung 33 stets über die Verbindungsnut 36 mit der ersten Ringnut in Verbindung steht.

Sobald der Oeldruck in der Einlassbohrung 27 einen durch die Wahl der Druckfeder 32 bestimmten Oeffnungsdruck von z.B. 6,5 - 12 bar erreicht, hebt die Membran 28 selbsttätig gegen den Druck der Druckfeder 32 vom Ventilsitz 29 ab, so dass das Oel von der Einlassbohrung 27 aus zwischen Ventilsitz 29 und Membran 28 hindurch in die erste Ringnut 26, von dort über die Verbindungsnut 36 in die zweite Ringnut 25, und von dort über die Auslassbohrung 33 zum Ausgang des Ventils strömen kann. Der Oeffnungsweg der Membran 28 bzw. der Hub des Druckbolzens 31 beträgt beim Oeffnen des Ventils nur etwa 5/100 bis 1/10 mm, so dass im Federraum 30 nur wenig Spiel vorgesehen werden muss. Wie bereits eingangs beschrieben, führt die (selbsttätige) Oeffnung des Abschlussventils 5 dazu, dass sich die vom Oeldruck beaufschlagte Fläche der Membran 28 und damit die auf die Druckfeder 32 ausgeübte Gegenkraft vergrössert. Dies hat zur Folge, dass das Ventil erst bei einem deutlich geringeren Druck wieder schliesst, der etwa 1-2 bar unter dem Oeffnungsdruck liegt. Dies hat auch zur Folge, dass der Druckabfall im Abschlussventil 5 sehr gering ist, so dass die Leistung der den Oeldruck erzeugenden Oelpumpe entsprechend günstiger bemessen werden kann.

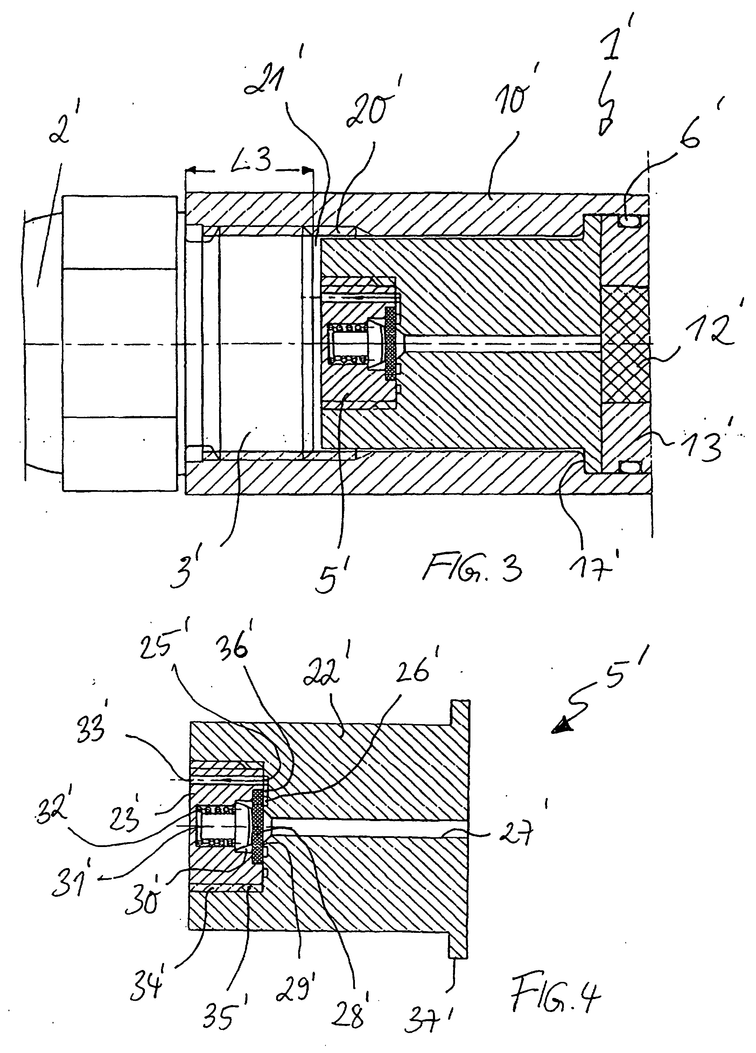

In dem bisher beschriebenen Beispiel wurde davon ausgegangen, dass in den Düsenstock ein Düseneinsatz mit den vollen Abmessungen gemäss der Euronorm EN 293 einbaubar sein sollte. Wird auf einen Düseneinsatz mit angesetztem Filter verzichtet, kann das Abschlussventil bei sonst gleichen Aussenabmessungen des Düsenstockes näher an die eigentliche Düse gebracht werden, um schädliche Räume zu verringern. Ein entsprechendes Ausführungsbeispiel für diesen Fall ist in den Fig. 3 und 4 in einer den Fig. 1 und 2 entsprechenden Darstellung wiedergegeben.

Beim Düsenstock 1' der Fig. 3 entsprechen das Rohr 10' mit dem Absatz 17', die Heizung 13', der Wärmetauscher 12' und das Innengewinde 20' weitgehend den mit den ungestrichenen Bezugszeichen bezeichneten äquivalenten Bauteilen aus Fig. 1, so dass in Fig. 3 nur der relevante Ausschnitt des Düsenstockes 1' gezeigt ist. Heizung 13' und Wärmetauscher 12' bilden allerdings im Unterschied zu Fig. 1 zur Düse hin eine ebene Abschlussfläche ohne einen Absatz zur Einpassung des Abschlussventils 5'. Der Düsenraum 21' ist gegenüber dem Düsenraum 21 aus Fig. 1 auf die Länge L3 von etwa 7,5 mm verkürzt, was gerade zur Aufnahme einer Druckzerstäuberdüse 2' mit dem Aussengewinde 3' aber ohne Filter ausreicht.

Das Abschlussventil 5' gemäss Fig. 4 hat denselben funktionellen Aufbau und im eigentlichen Ventilteil dieselben Abmessungen und Parameter wie das Abschlussventil 5 aus Fig. 2. Das Abschlussventil 5' ist gleichfalls ausgestattet mit einem Ventilgehäuse 22' mit Gewindesackloch 35' und umlaufender Schulter 37', einer Ventilschraube 23' mit Aussengewinde 34', einer Einlassbohrung 27', einer Auslassbohrung 33', einer Membran 28', Ringnuten 25' und 26', welche durch eine Verbindungsnut 36' verbunden sind, einem Ventilsitz 29', einem pilzförmigen Druckbolzen 31', und einer spiralförmigen Druckfeder 32'. Das Ventilgehäuse 22' mit der Einlassbohrung 27' ist gegenüber dem Abschlussventil 5 aus Fig. 2 jedoch soweit verlängert, dass der eigentliche Ventilteil mit der Membran 28' so nah wie möglich an der eingeschraubte Druckzerstäuberdüse 2' sitzt. Hierdurch wird der schädliche Raum zwischen dem Abschlussventil 5' und der Druckzerstäuberdüse 2' auf ein Minimum reduziert.

Es ist im übrigen denkbar, die düsenseitige Stirnfläche von Heizung 13' und Wärmetauscher 12' und das Ventilgehäuse 22' ebenso mit einem Absatz zu versehen wie dies in Fig. 1 bei der Heizung 13 und dem Wärmetauscher 12 und dem Ventilgehäuse 22 der Fall ist. Es können dann innerhalb desselben Düsenstockes wahlweise Abschlussventile 5 oder 5' eingesetzt werden, je nachdem, wieviel Platz für die Druckzerstäuberdüse 2 bzw. 2' benötigt wird.

Insgesamt ergibt sich mit der Erfindung ein Düsenstock mit integriertem Abschlussventil, der bei geringer Baulänge den Einbau genormter Druckzerstäuberdüsen ermöglicht, einfach und kompakt aufgebaut ist, leicht zu montieren und zu warten ist, und keinen zusätzlichen externen Steuerungsaufwand erfordert.

### BEZEICHNUNGSLISTE

- 1,1': Düsenstock
- 2,2': Druckzerstäuberdüse
- 3,3': Aussengewinde
- 4: Filter
- 5,5': Abschlussventil
- 6,6',15: O-Ring
- 7: Temperaturfühler
- 8: Zuleitung
- 9: Heizwicklung
- 10,10': Rohr (zylindrisch)
- 11: Ringspalt
- 12,12': Wärmetauscher
- 13,13': Heizung
- 14: Durchgangsbohrung
- 16: Anschlussteil
- 17,17': Absatz
- 18: Gewindebohrung
- 19: Anschlusskasten
- 20,20': Innengewinde
- 21,21': Düsenraum
- 22,22': Ventilgehäuse
- 23,23': Ventilschraube
- 24: Absatz
- 25,25': Ringnut
- 26,26': Ringnut
- 27,27': Einlassbohrung
- 28,28': Membran
- 29,29': Ventilsitz
- 30,30': Federraum
- 31,31': Druckbolzen
- 32,32': Druckfeder
- 33,33': Auslassbohrung
- 34,34': Aussengewinde
- 35,35': Gewindesackloch
- 36,36': Verbindungsnut
- 37,37': Schulter (umlaufend)
- L1,L2,L3: Länge

## Patentansprüche

1. Düsenstock (1, 1') für einen Öldruckzerstäubungsbrenner, wobei der Düsenstock (1, 1') ein längliches Rohr (10) umfaßt, welches an seinem einen Ende einen Düsenraum (21, 21') zur Aufnahme einer Druckzerstäuberdüse (2, 2') und an seinem anderen Ende ein Anschlußteil (16) zum Anschluß einer Ölzuführungsleitung aufweist, wobei der Düsenstock (1, 1') ein zwischen dem Anschlussteil (16) und dem Düsenraum (21) angeordnetes Abschlussventil (5, 5') zum Unterbrechen des Ölflusses bei nicht gezündetem Brenner umfaßt, wobei der Düsenstock (1, 1') als Vorwärmer ausgebildet ist und eine zwischen dem Abschlussventil (5, 5') und dem Anschlußteil (16) angeordnete Heizung (13, 13') zur Erwärmung des durchfließenden Öles aufweist,
***dadurch gekennzeichnet, dass***
das Abschlussventil als selbsttätig arbeitendes Ventil ausgebildet ist und dass
die Heizung (13, 13') und das Abschlussventil (5, 5') mit dem aufgesetzten Anschlussteil (16) in das Rohr (10) zur Bildung einer Baugruppeneinheit einschiebbar sind.

2. Düsenstock nach Anspruch 1, **dadurch gekennzeichnet, daß** die Heizung (13, 13') einen Wärmetauscher (12, 12') aufweist.

3. Düsenstock nach Anspruch 2, **dadurch gekennzeichnet, daß** die Heizung (13) eine Durchgangsbohrung (14) zur Führung des zu wärmenden Öls aufweist, und daß der Wärmetauscher (12) in der Durchgangsbohrung (14) angeordnet ist.

4. Düsenstock nach Anspruch 3, **dadurch gekennzeichnet, daß** sich die Durchgangsbohrung (14) zur Druckzerstäuberdüse (2) hin erweitert, um den vom Öl durchströmten Wärmetauscher (12) aufzunehmen.

5. Düsenstock nach einem oder mehreren der Ansprüche 1 bis 4, **dadurch gekennzeichnet, daß** innerhalb eines Ringspaltes (11) zwischen Rohr (10) und Heizung (13) eine Heizeinrichtung (9) zum Aufheizen der Heizung (13) angeordnet ist.

6. Düsenstock nach Anspruch 5, **dadurch gekennzeichnet, daß** Zuleitungen (8) zu der Heizung (13) im Ringspalt (11) geführt sind und zu einem seitlich außen am Düsenstock (1) angebrachten Anschlußkasten (19) verlaufen.

7. Düsenstock nach einem oder mehreren der Ansprüche 1 bis 6, **dadurch gekennzeichnet, daß** die Heizung (13) eine geregelte Heizung ist.

## Claims

1. Nozzle carrier (1, 1') for a pressurized oil atomization burner, wherein the nozzle carrier (1, 1') comprises an elongated tube (10) having a nozzle chamber (21,21') to receive an atomizer nozzle (2, 2') at its one end and a connector (16) for connecting an oil feed line at its other end, the nozzle carrier (1, 1') comprises a shut-off valve (5, 5') arranged between the connector (16) and the nozzle chamber (21) to interrupt the oil flow when the burner is not ignited, and the nozzle carrier (1, 1') is configured as a preheater and has a heater (13, 13') arranged between the shut-off valve (5, 5') and the connector (16) to heat the oil passing through,
***characterized in that***
the shut-off valve is configured as a valve that operates automatically and **in that** the heater (13, 13') and the shut-off valve (5, 5') with mounted connector (16) are insertable into the tube (10) to form a subassembly.

2. Nozzle carrier according to Claim 1, **characterized in that** the heater (13, 13') has a heat exchanger (12, 12').

3. Nozzle carrier according to Claim 2, **characterized in that** the heater (13) has a through bore (14) to convey the oil to be heated, and **in that** the heat exchanger (12) is arranged in the through bore (14).

4. Nozzle carrier according to Claim 3, **characterized in that** the through bore (14) is extended as far as the atomizer nozzle (2) to receive the heat exchanger (12) through which the oil passes.

5. Nozzle carrier according to one or more of Claims 1 to 4, **characterized in that** a heating element (9) for heating the heater (13) is arranged inside an annular gap (11) between tube (10) and heater (13).

6. Nozzle carrier according to Claim 5, **characterized in that** leads (8) to the heater (13) are led inside the annular gap (11) and run to a terminal box (19) mounted externally on the side of the nozzle carrier (1).

7. Nozzle carrier according to one or more of Claims 1 to 6, **characterized in that** the heater (13) is a regulated heater.

## Revendications

1. Raccord d'injecteur (1, 1') pour un brûleur à pulvérisation de fuel sous pression, étant précisé que ce raccord d'injecteur (1, 1') comprend un tuyau de forme allongée (10) qui présente à une extrémité un espace d'injecteur (21, 21') pour recevoir un injecteur de pulvérisateur sous pression (2, 2') et à son autre extrémité un élément de raccordement (16) pour le raccordement d'une conduite d'amenée de fuel, étant précisé que ledit raccord d'injecteur (1, 1') comprend une vanne d'arrêt (5, 5') disposée entre l'élément de raccordement (16) et l'espace d'injecteur (21) pour interrompre l'écoulement de fuel quand le brûleur n'est pas allumé, et étant précisé que ledit raccord d'injecteur (1, 1') est conçu comme un préchauffeur et comporte un élément de chauffage (13, 13') disposé entre la vanne d'arrêt (5, 5') et l'élément de raccordement (16) pour chauffer le fuel qui passe,
**caractérisé en ce que** la vanne d'arrêt est conçue comme une vanne à fonctionnement automatique et **en ce que** l'élément de chauffage (13, 13') et la vanne d'arrêt (5, 5') avec l'élément de raccordement (16) posé sont aptes à être glissés dans le tube (10) pour former une unité formant sous-groupe.

2. Raccord d'injecteur selon la revendication 1, **caractérisé en ce que** l'élément de chauffage (13, 13') comporte un échangeur de chaleur (12, 12').

3. Raccord d'injecteur selon la revendication 2, **caractérisé en ce que** l'élément de chauffage (13) présente un perçage de passage (14) pour amener le fuel à chauffer, et **en ce que** l'échangeur de chaleur (12) est disposé dans le perçage de passage (14).

4. Raccord d'injecteur selon la revendication 3, **caractérisé en ce que** le perçage de passage (14) s'élargit vers l'injecteur de pulvérisateur sous pression (2) afin de recevoir l'échangeur de chaleur (12) traversé par le fuel.

5. Raccord d'injecteur selon l'une des revendications 1 à 4, **caractérisé en ce qu'**un dispositif chauffant (9) destiné à chauffer l'élément de chauffage (13) est disposé à l'intérieur d'un espace annulaire (11) entre le tube (10) et ledit élément de chauffage (13).

6. Raccord d'injecteur selon la revendication 5, **caractérisé en ce que** des conduites d'amenée (8) menant à l'élément de chauffage (13) passent dans l'espace annulaire (11) et mènent à une boîte de raccordement (19) montée sur le côté et sur l'extérieur dudit raccord d'injecteur (1).

7. Raccord d'injecteur selon l'une au moins des revendications 1 à 6, **caractérisé en ce que** l'élément de chauffage (13) est un élément de chauffage régulé.
